# EUROPÄISCHE PATENTSCHRIFT

(11) **EP 2 201 537 B1**
(45) Veröffentlichungstag und Bekanntmachung des Hinweises auf die Patenterteilung: **29.03.2017**
(21) Anmeldenummer: 08802811.3
(22) Anmeldetag: 07.10.2008
(51) Int. Cl.: G04R 20/00, G04G 5/00

(54) **ALTERSABHÄNGIGE ZUGANGSBERECHTIGUNG**
AGE-DEPENDENT ACCESS AUTHORIZATION
AUTORISATION D'ACCÈS EN FONCTION DE L'ÂGE

(30) Priorität: 08.10.2007 DE 102007048236
(43) Veröffentlichungstag der Anmeldung: 30.06.2010
(73) Patentinhaber: Giesecke & Devrient GmbH, 81677 München (DE)
(72) Erfinder: SCHMALZ, Frank, 81371 München (DE); HOCKAUF, Manfred, 85567 Grafing (DE)
(86) Internationale Anmeldenummer: PCT/EP2008/008460
(87) Internationale Veröffentlichungsnummer: WO 2009/046961

(56) Entgegenhaltungen:
- WO-A-2006/112875
- WO-A-2007/071206
- DE-A1-102005 025 806
- JP-A- 2006 209 433
- US-A1- 2003 065 957
- US-B1- 6 253 322

## Beschreibung

Die vorliegende Erfindung betrifft ein Verfahren zum Prüfen einer altersabhängigen Zugangsberechtigung eines Benutzers durch einen portablen Datenträger sowie einen derartigen Datenträger.

Es gibt vielfältige Waren- und Dienstleistungsangebote, die nur eine Person in Anspruch nehmen kann, die ein vorgegebenes Mindestalter überschreitet, z.B. Alkohol, Zigaretten, jugendgefährdende Medien oder dergleichen. Es ist heutzutage üblich, derartige Waren und Dienstleistungen mit Hilfe eines individualisierten portablen Datenträgers, beispielsweise einem elektronischen Ausweis, in Anspruch zu nehmen, ohne dass der Waren- oder Dienstleistungsanbieter das Alter der betreffenden Person persönlich prüfen muss.

Im Zusammenhang mit der elektronischen Altersprüfung bei maschinenlesbaren Reisedokumenten offenbart das Dokument "Technical Guideline - Advanced Security Mechanisms for Machine Readable Travel Documents (MRTD) - Extended Access Control (EAC), Version 1.0, TR-03110" des Bundesamts für Sicherheit in der Informationstechnik (BSI) ein Konzept, bei dem ein elektronisches Reisedokument das Geburtsdatum der betreffenden Person sowie ein weitestgehend aktuelles und aktualisierbares Vergleichsdatum umfasst. Aus diesen Angaben kann das Alter der Person abgeleitet werden. Hierbei ist vorgesehen, dass das elektronische Reisedokument das Vergleichsalter über besonders autorisierte Kommunikationskanäle zusammen mit einem Aktualisierungszertifikat erhält, so dass die Aktualisierung des Vergleichsdatums unter staatlicher Aufsicht durchgeführt wird, z.B. durch Behörden oder bei Grenzkontrollen. Mit einem derartigen Aktualisierungszertifikat können auch Leserechte der betreffenden Behörde für bestimmte in dem elektronischen Reisedokument abgelegte persönliche Daten der betreffenden Person eingerichtet werden, z.B. das Geburtsdatum oder die Adresse.

Für die alleinige Prüfung, ob die Person, der ein elektronischer Ausweis zugeordnet ist, ein vorgegebenes Mindestalter erreicht oder überschreitet, um eine entsprechende Ware oder Dienstleistung in Anspruch nehmen zu können, ist es jedoch nicht notwendig, das Geburtsdatum der Person zu offenbaren, so dass das EAC-Konzept des BSI zumindest in diesem Kontext die persönlichen Daten der betreffenden Person nicht ausreichend schützt.

Die US 6,935,559 B2 offenbart ein Verfahren zur altersabhängigen Zugangskontrolle mittels eines portablen Datenträgers, z.B. einer Chipkarte, bei dem jedoch auch das Alter der überprüften Person berechnet wird und unter Umständen auf einer Anzeigenvorrichtung angezeigt wird. Ebenso sehen die US 6,679,425 B1 und die EP 1 548 664 A1 vor, zum Altersnachweis jeweils das tatsächliche Alter einer Person preiszugeben. Die Feststellbarkeit des genauen Alters einer Person, der der portable Datenträger zugeordnet ist, ist in der Regel jedoch unnötig und nicht erwünscht.

Aus der US 2003/0065957 A1 ist ein Pay-TV-System bekannt, das mithilfe einer IC-Karte prüft, ob ein Nutzer ein vorgegebenes Mindestalter besitzt. Auf der Karte ist das Geburtsdatum des Benutzers gespeichert. Von einer Descrambler-Einheit wird der Karte ein aktuelles Datum bereitgestellt. Aus dem aktuellen Datum und dem Geburtsdatum ermittelt die Karte das Alter des Benutzers. Ist das Alter gleich oder größer als ein Mindestalter, erzeugt die Karte einen Schlüssel, den sie an die Descrambler-Einheit übermittelt. Die bekannte Lösung richtet sich auf ein geschlossenes System, in dem eine IC-Karte gezielt auf ein Prüfgerät abgestimmt ist. Für einen Einsatz auf einem elektronischen Ausweis ist sie nicht geeignet.

Demzufolge ist es die Aufgabe der vorliegenden Erfindung, eine altersabhängige Zugangsberechtigung mittels eines elektronischen Ausweises vorzuschlagen, bei der das tatsächliche Alter eines Benutzers des elektronischen Ausweises nicht offenbart wird.

Diese Aufgabe wird erfindungsgemäß durch ein Verfahren sowie einen Datenträger mit den Merkmalen der unabhängigen Ansprüche gelöst. In davon abhängigen Ansprüchen sind vorteilhafte Ausgestaltungen und Weiterbildungen der Erfindung angegeben.

Das erfindungsgemäße Verfahren zum Prüfen einer altersabhängigen Zugangsberechtigung eines Benutzers eines erfindungsgemäßen portablen Datenträgers umfasst zunächst den Schritt des Empfangens eines Prüfzertifikats durch den Datenträger von einem mit dem Datenträger verbundenen Prüfgerät. Das Prüfzertifikat umfasst zumindest das zu prüfende Mindestalter, wobei das Prüfgerät dem Benutzer eine Zugangsberechtigung zu den gewünschten Waren und Dienstleistungen gewährt, wenn der Datenträger feststellt, dass das tatsächliche Alter des Benutzers das von dem Prüfgerät vorgegebene Mindestalter erreicht oder überschreitet.

Dazu ist in dem portablen Datenträger zumindest das Geburtsdatum des Benutzers und ein aktualisierbares Vergleichsdatum abgespeichert, wobei der Schritt des Prüfens der altersabhängigen Zugangsberechtigung darin besteht, aus dem Geburtsdatum und dem Vergleichsdatum das Alter des Benutzers abzuleiten und mit dem Mindestalter zu vergleichen. Der portable Datenträger kann beispielsweise ein offizielles elektronisches Ausweisdokument sein, z.B. ein elektronisches Reisedokument. Sofern das ermittelte Alter des Benutzers das vorgegebene Mindestalter erreicht, wird dem Prüfgerät das entsprechende positive Prüfergebnis in Form einer Ja-Information zur Verfügung gestellt, woraufhin dieses dem Benutzer den gewünschten Zugang freigibt. Bei einem negativen Prüfergebnis, wenn der Benutzer also zu jung ist, wird dem Prüfgerät demgegenüber eine Nein-Information zur Verfügung gestellt, so dass dem Benutzer der gewünschte Zugang von dem Prüfgerät verwehrt wird.

Ein portabler Datenträger, der diese Funktionalität im Zusammenhang mit einem Prüfgerät bereitstellt, umfasst einen Prozessor, eine Steuereinrichtung, die über eine Kommunikationsschnittstelle des Datenträgers von einem mit dem Datenträger verbundenen Prüfgerät das Prüfzertifikat mit dem Mindestalter empfängt und ein positives/negatives Prüfergebnis einer Prüfeinrichtung des portablen Datenträgers in Form einer Ja/Nein-Information bereitstellt. Die Prüfeinrichtung, beispielsweise eine arithmetische Einheit oder dergleichen, leitet aus dem Geburtsdatum und dem Vergleichsdatum, die beide in einem Speicher des portablen Datenträgers abgespeichert sind, das Alter des Benutzers her, vergleicht dieses mit dem mittels dem Prüfzertifikat empfangenen Mindestalter und benachrichtigt die Steuereinrichtung des Datenträgers über das Prüfergebnis.

Dadurch, dass der portable Datenträger das Ergebnis der Prüfung der altersabhängigen Zugangsberechtigung des Benutzers in Form einer Ja/Nein-Information dem Prüfgerät bereitstellt, bleiben persönliche Daten des Benutzers, die möglicherweise auf dem portablen Datenträger abgespeichert sind, geschützt, denn das Prüfgerät hat keinerlei Zugang zu den personenbezogenen Daten des Datenträgers, sofern dies nicht aus anderen Gründen notwendig ist.

Das im Speicher des Datenträgers abgelegte Vergleichsdatum kann der Benutzer des Datenträgers einfach aktualisieren, indem er - möglichst vor einer absehbaren Prüfung einer altersabhängigen Zugangsberechtigung - ein Aktualisierungszertifikat mit einem aktuellen Vergleichsdatum von einem öffentlich zugänglichen Aktualisierungsgerät empfängt. Die Steuereinrichtung des Datenträgers vergleicht dann, ob das mit dem Aktualisierungszertifikat empfangene Vergleichsdatum aktueller ist als das gegenwärtig gespeicherte Vergleichsdatum. Falls dies der Fall ist, wird das im Speicher gespeicherte Vergleichsdatum durch das empfangene aktuellere Vergleichsdatum ersetzt und in Zukunft verwendet. Auf diese Weise kann der Benutzer des Datenträgers das Vergleichsdatum jederzeit aktualisieren, wodurch das tatsächliche Alter des Benutzers durch die Prüfeinrichtung genauer ermittelt werden kann.

Ein Aktualisierungszertifikat mit einem aktuellen Vergleichsdatum enthält vorzugsweise keine weitere Zugriffsberechtigung für ein Aktualisierungs- oder Prüfgerät auf Daten des Datenträgers. Das Aktualisierungszertifikat umfasst lediglich das aktuelle Vergleichsdatum, wodurch die Möglichkeit geschaffen wird, Aktualisierungszertifikate auf beliebigen öffentlich zugänglichen Aktualisierungsgeräten zu hinterlegen, da mit dem Empfangen eines Aktualisierungszertifikats keinerlei Einschränkungen der Integrität und Sicherheit des portablen Datenträgers verbunden ist.

Das Aktualisierungszertifikat kann beispielsweise durch die Steuereinrichtung von einem öffentlichen Terminal oder auch einer im Internet aufrufbaren Website heruntergeladen werden, im letzteren Fall benötigt der Benutzer ein separates Schreib-/Lesegerät, das mit einem Internet-fähigen Personal Computer oder dergleichen verbunden ist und ein Aktualisierungszertifikat auf dem portablen Datenträger überspielt. Vorzugsweise ist die Kommunikation zwischen dem Datenträger und dem Aktualisierungs- und/oder Prüfgerät kontaktlos, beispielsweise über Funkschnittstellen, wie z.B. eine RFID-Schnittstelle.

Die Steuereinrichtung des Datenträgers kann bei Empfang eines neuen Aktualisierungszertifikats zunächst prüfen, ob das Aktualisierungszertifikat tatsächlich keinerlei Leseberechtigung für das Aktualisierungsgerät oder ein Prüfgerät umfasst, um den Schutz der im Datenträger gespeicherten persönlichen Daten des Benutzers zu gewährleisten. Erst dann wird das empfangene aktuelle Vergleichsdatum gegebenenfalls aktualisiert.

Ebenso kann durch eine Verifikationseinrichtung des portablen Datenträgers, die z.B. als eine kryptographische Einrichtung ausgestaltet sein kann, eine Signatur des Aktualisierungszertifikats geprüft werden, um festzustellen, ob das Aktualisierungszertifikat ursprünglich von einer vertrauenswürdigen Stelle erzeugt wurde, beispielsweise einer Behörde oder der Bundesregierung. Falls die Signatur des Aktualisierungszertifikats erfolgreich verifiziert wird, sendet die Verifikationseinrichtung ein Aktivierungssignal an die Steuereinrichtung, damit diese das Vergleichsdatum aktualisiert.

Das Bereitstellen der Ja/Nein-Information gegenüber einem Prüfgerät kann beispielsweise dadurch erfolgen, dass die Steuereinrichtung bei einer erfolgreichen altersabhängigen Zugangsprüfung ein Ja-Signal an das mit dem Datenträger verbundene Prüfgerät schickt und dieses daraufhin dem Benutzer einen Zugang zu den gewünschten Waren oder Dienstleistungen gewährt. Bei einem Nein-Signal verweigert die Prüfeinrichtung entsprechend den Zugang zu den gewünschten Waren oder Dienstleistungen.

Alternativ kann das von dem Prüfgerät an den portablen Datenträger geschickte Prüfzertifikat, welches das zu prüfende Mindestalter umfasst, auch eine Leseberechtigung des Prüfgeräts umfassen, die sich auf einen bestimmten, vorzugsweise besonders abgesicherten Speicherbereich des Speichers des portablen Datenträgers bezieht. Die Ja/Nein-Information bezüglich der altersabhängigen Zugangsprüfung kann dann von der Steuereinrichtung in diesem abgesicherten Speicherbereich abgespeichert werden. Dort kann das Prüfgerät die Ja/Nein-Information aufgrund der mit dem Prüfzertifikat übertragenen gesonderten Leseberechtigung abrufen oder auslesen, eventuell nachdem es von der Steuereinrichtung darüber benachrichtigt wurde, dass eine Ja/Nein-Information in dem abgesicherten Speicherbereich bereitliegt.

Besonders in dem Fall, in dem das Prüfzertifikat eine Leseberechtigung des Prüfgeräts umfasst, wird die tatsächliche Berechtigung des Prüfgeräts, die Ja/Nein-Information der Prüfeinrichtung des Datenträgers zu erhalten, anhand einer Signatur des Prüfzertifikats durch die Verifikationseinrichtung des Datenträgers verifiziert. Sofern diese Signatur das Prüfgerät als ein berechtigtes Gerät ausweist, z.B. als Prüfmodul in einem Zigarettenautomat oder zur Zugangskontrolle von jugendgefährdenden Medien, Alkohol oder Waffen, wird dem Prüfgerät gestattet, die Ja/Nein-Information aus dem gesicherten Speicherbereich des Datenträgers auszulesen.

Bei der Prüfung einer altersabhängigen Zugangsberechtigung zu bestimmten Waren oder Dienstleistungen, beispielsweise zu Waffen, kann das entsprechende Prüfgerät, das den Zugang zu derartigen Waren oder Dienstleistungen beschränkt, ein Prüfzertifikat an den Datenträger übertragen, das eine Leseberechtigung für weitere in dem Speicher des Datenträgers gespeicherte persönliche Daten des Benutzers umfasst. Diese Leseberechtigung berechtigt das Prüfgerät, bestimmte persönliche Daten des Benutzers auszulesen, die für eine weitere, z.B. behördliche Registrierung der in Anspruch genommenen Waren benötigt werden, z.B. die Adresse des Benutzers. Dieses Auslesen von persönlichen Daten durch das Prüfgerät gefährdet jedoch nicht die Integrität des Datenträgers sowie den Schutz der Daten des Benutzers, denn zum Zugang zu besonders gesicherten Waren oder Dienstleistungen, wie z.B. Waffen, ist eine persönliche Registrierung mit vollständiger Adresse ohnehin erforderlich.

Vorzugsweise ist der Datenträger mit einer Kommunikationsschnittstelle ausgestattet, über die eine Kommunikationsverbindung zu dem Aktualisierungsgerät und/ oder dem Prüfgerät hergestellt werden kann. Diese Kommunikationsschnittstelle ist vorzugsweise eine kontaktlose Schnittstelle, die über eine Funkverbindung oder dergleichen angesprochen werden kann. Der erfindungsgemäße portable Datenträger ist insbesondere ein chipkartenförmiger elektronischer Ausweis, z.B. eine elektronische Identifikationskarte, ein "ePass" oder ein "Machine Readable Travel Document" (MRTD) gemäß dem oben genannten EAC-Konzept des BSI.

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig. 1: ein Flussdiagramm des erfindungsgemäßen Verfahrens; und
- Fig. 2: eine schematische Darstellung eines erfindungsgemäßen portablen Datenträgers.

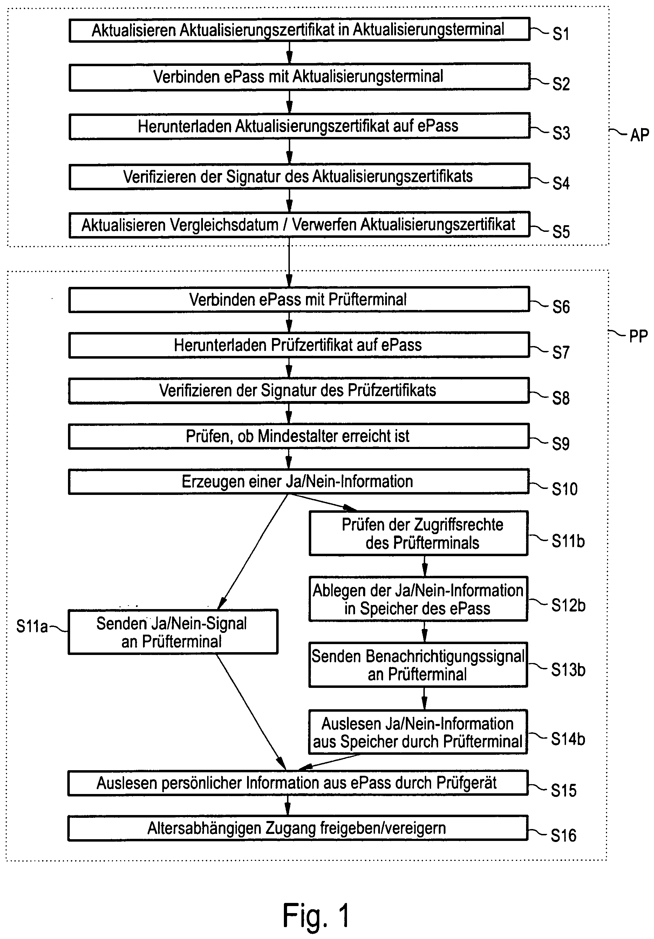

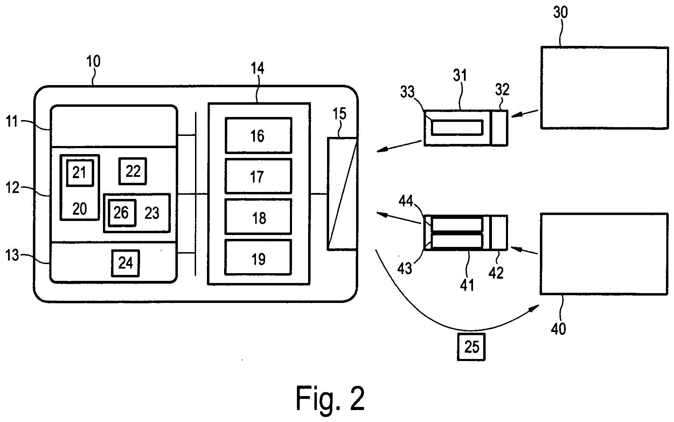

Das in Fig.1 skizzierte Verfahren wird von der in Fig. 2 abgebildeten Anordnung, bestehend aus einem chipkartenförmigen elektronischen Ausweis 10 ("ePass"), der auch biometrische Daten enthalten kann (z.B. ein MRTD gemäß dem EAC-Konzept des BSI), einem Aktualisierungsgerät 30 sowie einem Prüfgerät 40 ausgeführt. Grundlage des Verfahrens ist der Vergleich des momentanen Alters des Benutzers des elektronischen Ausweises 10, das aus einem jeweils in einem EEPROM- oder Flash-Speicher 12 des elektronischen Ausweises 10 befindlichen Geburtsdatum 21 und Vergleichsdatum 22 abgeleitet wird, mit einem von dem Prüfgerät 40 bereitgestellten Mindestalter 24, 43. Durch diesen Vergleich errechnet die Prüfeinrichtung 17 des elektronischen Ausweises 10, ob das Alter des Benutzers das Mindestalter 24,43 erreicht oder überschreitet.

Die dazu benötigten Komponenten des elektronischen Ausweises 10, z.B. die in Fig. 2 dargestellte Steuereinrichtung 16, Prüfeinrichtung 17, Verifikationseinrichtung 18 und Kommunikationseinrichtung 19, stellen vorzugsweise von einem Prozessor 14 des elektronischen Ausweises 10 ausführbare Applikationen oder Systemprogramme dar, die wahlweise in einem Flash-Speicher 12 oder einem ROM-Speicher 11 abgelegt sein können. Der RAM-Speicher wird von diesen Komponenten 16 -19 als Arbeitsspeicher verwendet.

Das aktualisierbare Vergleichsdatum 22 bildet ein möglichst aktuelles Datum, damit das Alter des Benutzers des elektronischen Ausweises 10 jederzeit möglichst genau bestimmt werden kann. Durch die aus den Verfahrensschritten S1 bis S5 bestehende Aktualisierungsphase AP kann das Vergleichsdatum 22 von Zeit zu Zeit durch den Benutzer des elektronischen Ausweises 10 aktualisiert werden.

Die Aktualisierung des Vergleichsdatums 22 erfolgt dadurch, dass ein Aktualisierungszertifikat 31 von einem Aktualisierungsgerät 30 auf den elektronischen Ausweis 10 geladen wird, das neben einer Signatur 32 ein aktuelles Vergleichsdatum 33 umfasst, welches gegebenenfalls das bisherige Vergleichsdatum 22 ersetzt.

In Schritt S1 wird auf dem Aktualisierungsgerät 30 ein Aktualisierungszertifikat 31 mit einem aktuellen, tagesgenauen Vergleichsdatum 33 regelmäßig hinterlegt, vorzugsweise täglich. Das Aktualisierungsgerät kann z.B. eine auf einem Personal Computer angezeigte Aktualisierungswebsite im Internet sein, so dass der Benutzer das Vergleichszertifikat 31 mittels einem Chipkartenlesegerät (nicht dargestellt), das an den Personal Computer angeschlossen ist, auf den elektronischen Ausweis 10 laden kann. Ebenso kann das Aktualisierungsgerät 30 ein öffentliches Terminal sein, z.B. ein Fahrkartenautomat oder dergleichen, mit dem der elektronische Ausweis 10 kontaktlos über seine Kommunikationseinrichtung 19 und eine entsprechende Kontaktlosschnittstelle 15, z.B. eine Antenne oder dergleichen, oder kontaktbehaftet über ein Kontaktfeld als Schnittstelle 15 kommunizieren kann.

Vorzugsweise führt die Kommunikationseinrichtung 19 eine Datenkommunikation zwischen dem elektronischen Ausweis 10 und einem Aktualisierungsgerät 30 oder einem Prüfgerät 40 in einer kontaktlosen Weise, so dass die Kommunikationsschnittstelle 15 eine Funkschnittstelle, z.B. eine Antenne oder RFID-Schnittstelle repräsentiert, die mit entsprechenden Schnittstellen (nicht dargestellt) des Aktualisierungsgeräts 30 oder des Prüfgeräts 40 korrespondiert. Die Datenstrukturen der Aktualisierungs- und Prüfzertifikate 31, 41 entsprechen weitestgehend denjenigen, die das eingangs genannte EAC-Konzept (Extended Access Control) des Bundesamts für Sicherheit in der Informationstechnik (BSI) vorsieht, die jedoch um die nachfolgend beschriebenen Komponenten erweitert sind. So umfasst z.B. das Prüfzertifikat 41 ein Mindestalter-Objekt 43, das das zu prüfende Mindestalter angibt. Die hier beschriebene Infrastruktur lässt sich insofern als abwärtskompatible Erweiterung des EAC-Konzepts des BSI realisieren.

Nach dem Verbinden des elektronischen Ausweises 10 mit dem Aktualisierungsgerät 30 über eine geeignete Kommunikationsschnittstelle 15 (Schritt S2) kann das Aktualisierungsgerät 30 ein Aktualisierungszertifikat 31 an den elektronischen Ausweis 10 kontaktlos oder kontaktbehaftet übertragen (Schritt S3). Danach prüft die Prüfeinrichtung 17 des elektronischen Ausweises 10, ob das aktuelle Vergleichsdatum 33 tatsächlich aktueller ist, als das im Speicher 12 vorliegende bisherige Vergleichsdatum 22 (Schritt S4). Das bisherige Vergleichsdatum 22 wird nur dann durch das aktuellere Vergleichsdatum 33 aus dem Aktualisierungszertifikat 31 ersetzt, falls es älter ist.

Bei der Kommunikation zwischen dem elektronischen Ausweis 10 und einem Aktualisierungsgerät 30 in Form einer Aktualisierungswebsite 30, z.B. über einen Personal Computer und ein Chipkarten-Lesegerät des Benutzers, oder in Form eines öffentlichen Terminals, ist - abgesehen von dem nachfolgend beschriebenen Verifizieren einer Signatur 32 durch die Verifikationseinrichtung 18 - eine besondere Absicherung der Datenkommunikation zwischen dem Aktualisierungsgerät 30 und dem elektronischen Ausweis 10 nicht notwendig, da das Aktualisierungszertifikat 31 außer dem aktuellen Vergleichsdatum 33 keinerlei sensible Daten umfasst, die besonders schützenswert wären. Insbesondere umfasst das Aktualisierungszertifikat 31 keine Zugriffsrechte des Aktualisierungsgeräts 30 auf Daten 20 - 25 im Speicher 12, 13 des elektronischen Ausweises 10.

Vor dem Aktualisieren des bisherigen Vergleichsdatums 22 durch das aktuelle Vergleichsdatum 33 prüft die Verifikationseinrichtung 18 des elektronischen Ausweises 10 eine Signatur 32 des Aktualisierungszertifikats 31, um sicherzustellen, dass das Zertifikat 31 von einer vertrauenswürdigen Stelle erzeugt wurde, beispielsweise von einer Behörde, wie der Bundesregierung oder dem Bundesamt für Sicherheit in der Informationstechnik (BSI). Falls sich herausstellt, dass das Aktualisierungszertifikat 31 echt ist (Schritt S4), wird die Aktualisierung des Vergleichsdatums 22 durchgeführt, andernfalls wird das Zertifikat 31 verworfen (Schritt S5). Falls das Aktualisierungszertifikat 31 von der Verifikationseinrichtung 18 als nicht gültig oder nicht auswertbar betrachtet wird, kann unmittelbar ein entsprechend negatives Antwortsignal an das Aktualisierungsgerät 30 erfolgen.

Mit dem Schritt S5 ist die Aktualisierungsphase abgeschlossen. Die davon prinzipiell unabhängigen Verfahrensschritte S6 bis S17 repräsentieren die Prüfungsphase PP auf Basis eines aktuellen Vergleichsdatums 22, d.h. die Prüfung einer altersabhängigen Zugangsberechtigung des Benutzers des elektronischen Ausweises 10 in Interaktion mit einem Prüfgerät 40.

Hierzu stellt der Benutzer des elektronischen Ausweises 10 zunächst über dessen Kommunikationseinrichtung 19 und Kommunikationsschnittstelle 15 eine Verbindung von dem elektronischen Ausweis 10 zu dem Prüfgerät 40 her (Schritt S6). Das Prüfgerät 40 kann beispielsweise auf einer Website installiert sein, die jugendgefährdende oder aus anderen Gründen indizierte Medien anbietet, oder an einer Kaufhauskasse, einem Zigarettenautomat oder Getränkemarkt, um eine Zugangsberechtigung des Benutzers zu bestimmten dort erhältlichen Waren zu prüfen, die nur Personen mit einem gesetzlichen Mindestalter zugänglich gemacht werden dürfen.

Das Prüfgerät 40 übermittelt dem elektronischen Ausweis 10 ein Prüfzertifikat 41 (Schritt S7), das eine Signatur 42, das zu prüfende Mindestalter 43 und gegebenenfalls Zugriffsrechte 44 umfasst. Durch die Verifikation der Signatur 42 stellt die Verifikationseinrichtung 18 des elektronischen Ausweises 10 sicher, dass das Prüfgerät die Berechtigung besitzt, das Mindestalter des Benutzers des elektronischen Ausweises 10 überprüfen zu dürfen (Schritt S8). Diese durch die Signatur 42 ausgewiesene Berechtigung des Prüfgeräts 40 kann sich dabei insbesondere lediglich auf die Prüfung eines bestimmten einzelnen Mindestalters beschränken, z.B. 16 Jahre, 18 Jahre oder 21 Jahre. Das Prüfzertifikat 41 enthält zudem das entsprechend nachzuweisende Mindestalter 43, das der elektronische Ausweis 10 im Falle einer positiven Verifikation der Signatur 42 beispielsweise in einem RAM-Speicher des elektronischen Ausweises 10 als temporäres Objekt 24 zur weiteren Verwendung durch die Prüfeinrichtung 17 schreiben kann.

Anschließend wird die eigentliche altersabhängige Zugangsprüfung durch die Prüfeinrichtung 17 durchgeführt, indem aus dem Geburtsdatum 21 und dem aktuellen Vergleichsdatum 22 das Alter des Benutzers des elektronischen Passes 10 abgeleitet wird und geprüft wird, ob dieses abgeleitete Alter größer oder gleich dem Mindestalter 24 ist (Schritt S9). Als Ergebnis dieses Prüfschritts generiert die Prüfeinrichtung 17 entsprechend eine das Prüfergebnis wiedergebende Ja/Nein-Information (Schritt S10). Diese Ja/Nein-Information kann erforderlichenfalls auch von der Steuereinrichtung 16 generiert werden, nachdem ihr die Prüfeinrichtung 17 das Prüfergebnis mitgeteilt hat.

Die Ja/Nein-Information wird dem Prüfgerät 40 als Ergebnis der altersabhängigen Zugangsprüfung von der Steuereinrichtung 16 bereitgestellt. Hierfür gibt es zwei alternative Verfahrensweisen, die durch die Schritte S11a, einerseits, und S11b - S14b, andererseits, veranschaulicht werden.

Einerseits kann für das Prüfgerät 40 ein entsprechendes Ja/Nein-Signal 25 durch die Steuereinrichtung 16 erzeugt und durch die Kommunikationseinrichtung 19 an die Prüfeinrichtung 40 gesendet werden (Schritt S11a). Sofern es sich hierbei um ein Ja-Signal handelt, das eine erfolgreiche altersabhängige Zugangsprüfung wiedergibt, kann die Prüfeinrichtung 40 den altersabhängigen Zugang unmittelbar freigeben. Andernfalls wird der altersabhängige Zugang von der Prüfeinrichtung verweigert und der Benutzer des elektronischen Ausweises 10 kann die gewünschte Ware oder Dienstleistung nicht in Anspruch nehmen (Schritt S16).

Alternativ kann die Ja/Nein-Information bereitgestellt werden, indem zunächst von der Steuereinrichtung 16 geprüft wird, ob das Zertifikat 41 eine Leseberechtigung 44 für einen bestimmten Speicherbereich 23 im Flash-Speicher 12 umfasst (Schritt S11b). Sofern dies der Fall ist, kann die Ja/Nein-Information als Datum 26 in dem betreffenden Speicherbereich 23 abgelegt werden (Schritt S12b). Anschließend sendet die Steuereinrichtung 16 ein Benachrichtigungssignal an die Prüfeinrichtung 40, wonach die Ja/Nein-Information 26 im Speicherbereich 23 für die Prüfeinrichtung 40 zum Auslesen bereitsteht (Schritt S13b). Schließlich greift die Prüfeinrichtung 40 gemäß der Leserechte 44 auf den Speicherbereich 23 zu, liest die Ja/Nein-Information 24 aus und wertet sie anschließend entsprechend aus (Schritt S14b). Falls es sich hierbei um eine Ja-Information handelt, wird der Zugang für den Benutzer des elektronischen Ausweise 10 zu den gewünschten Waren oder Dienstleistungen freigegeben, andernfalls verwehrt (Schritt S16).

Nach der Bereitstellung der Ja/Nein-Information für das Prüfgerät 40 (Schritt S11a oder Schritte S11b - S14b) und vor dem Freigeben/Verwehren des gewünschten Zugangs (Schritt S16) ist es zusätzlich möglich, dass abhängig von der Art der von dem Benutzer gewünschten Waren und Dienstleistungen ein Zugriff der Prüfeinrichtung 40 auf persönliche Daten 20 oder andere Daten 21 - 26 in dem Flash-Speicher 12 oder ROM-Speicher 11 des elektronischen Ausweises 10 vorgenommen wird (Schritt S15). Selbstverständlich kann ein derartiges zusätzliches Auslesen von Daten durch das Prüfgerät 40 nur erfolgen, wenn die im Prüfzertifikat 41 enthaltene Leseberechtigung 44 dem Prüfgerät 40 diese Befugnis gibt. Dies ist insbesondere dann sinnvoll, wenn die Inanspruchnahme der zugangsbeschränkten Waren oder Dienstleistungen ohnehin einen Registrierungsvorgang umfasst, bei dem der Benutzer zumindest seine Adresse angeben muss, wie z.B. bei Waffen. Falls das Prüfzertifikat 41 keine Leseberechtigung 44 des Prüfgeräts 40 umfasst, kann die Datenkommunikation zwischen dem elektronischen Ausweis 10 und dem Prüfgerät 40 ungesichert erfolgen, wie oben im Zusammenhang mit dem Aktualisierungsgerät 30 erläutert. Falls das Prüfzertifikat jedoch eine Leseberechtigung 44 umfasst, wird die Datenkommunikation zwischen dem elektronischen Ausweis 10 und dem Prüfgerät 40 vorzugsweise verschlüsselt durchgeführt, unterstützt durch die Verifikationseinrichtung 18 des elektronischen Ausweises 10.

Die Verifikationseinrichtung 18 ist in der Regel als Kryptographieeinrichtung ausgestaltet, die eine bestehende "Public-Key"-Infrastruktur nutzt, um die digitalen Signaturen 32, 42 des Aktualisierungszertifikats 31 und des Prüfzertifikats 41 kryptographisch zu verifizieren (Schritte S4 und S8) und dadurch sicherstellt, dass die betreffenden Zertifikate 31, 41 von vertrauenswürdigen und/oder berechtigten Stellen stammen.

## Patentansprüche

1. Verfahren zum Prüfen einer altersabhängigen Zugangsberechtigung eines Benutzers durch einen portablen Datenträger (10), in dem zumindest das Geburtsdatum (21) des Benutzers und ein aktualisierbares Vergleichsdatum (22) gespeichert ist, mit den Schritten:
- Empfangen (S3) eines Prüfzertifikats (41), das ein zu prüfendes Mindestalter (24,43) umfasst, von einem Prüfgerät (40) durch den Datenträger (10);
- Prüfen (S4), ob das aus dem Geburtsdatum (21) und dem aktualisierbaren Vergleichsdatum (22) ableitbare Alter des Benutzers das Mindestalter (24,43) erreicht; und
- Bereitstellen (S11a; S11b-S14b) eines positiven/negativen Prüfergebnisses in Form einer entsprechenden Ja/Nein-Information (25, 26) für das Prüfgerät (40),
- **dadurch gekennzeichnet, dass**
- das aktualisierbare Vergleichsdatum aktualisiert wird, indem von einem öffentlich zugänglichen Aktualisierungsgerät (30) ein ein aktuelles Vergleichsdatum enthaltendes Aktualisierungszertifikat empfangen und das gespeicherte Vergleichsdatums (22) durch das empfangene Vergleichsdatum (33) ersetzt wird, sofern das empfangene Vergleichsdatum (33) aktueller als das gespeicherte Vergleichsdatum (22) ist.

2. Verfahren nach Anspruch 1, **dadurch gekennzeichnet, dass** das Aktualisierungsgerät (30) regelmäßig Aktualisierungszertifikate (31) mit aktuellen Vergleichsdaten (33) zum Empfangen (S3) durch einen mit dem Aktualisierungsgerät (30) verbundenen Datenträger (10) bereitstellt.

3. Verfahren nach Anspruch 1 oder 2, **dadurch gekennzeichnet, dass** der Datenträger (10) das Aktualisierungszertifikat (31) durch Herunterladen (S3) von einem öffentlichen Terminal oder von einer Webseite im Internet empfängt.

4. Verfahren nach einem der Ansprüche 1 bis 3, **dadurch gekennzeichnet, dass** der Datenträger (10) nur dann das Aktualisierungszertifikat (31) akzeptiert und das aktualisierbare Vergleichsdatum (22) aktualisiert (S5), wenn das Aktualisierungszertifikat (31) nur das aktuelle Vergleichsdatum (33) und keinerlei Leseberechtigung des Aktualisierungsgeräts (30) umfasst.

5. Verfahren nach einem der Ansprüche 1 bis 4, **dadurch gekennzeichnet, dass** der Datenträger (10) nur dann das Aktualisierungszertifikat (31) akzeptiert und das aktualisierbare Vergleichsdatum (22) aktualisiert (S5), wenn anhand einer Signatur (32), die von dem empfangenen Aktualisierungszertifikat (31) umfasst ist, verifiziert wird (S4), dass das Aktualisierungszertifikat (31) von einer vertrauenswürdigen Stelle stammt.

6. Verfahren nach einem der vorhergehenden Ansprüche, **dadurch gekennzeichnet, dass** dem Prüfgerät (40) das Prüfergebnis bereitgestellt wird, indem die Ja/Nein-Information (26) in einem Speicherbereich (23) des Datenträgers (10) hinterlegt wird (S12b), für den das Prüfgerät (40) mittels des von dem Datenträger (10) empfangenen Prüfzertifikats (41) eine Leseberechtigung (44) nachgewiesen hat (S11b).

7. Verfahren nach einem der Ansprüche 1 bis 5, **dadurch gekennzeichnet, dass** dem Prüfgerät (40) das Prüfergebnis bereitgestellt wird, indem die Ja/Nein-Information in Form eines Ja/Nein-Signals (25) von dem Datenträger (10) an das Prüfgerät (40) übertragen wird (S11a).

8. Verfahren nach einem der vorhergehenden Ansprüche, **dadurch gekennzeichnet, dass** vor dem Prüfen (S9) der altersabhängigen Zugangsberechtigung des Benutzers, die Berechtigung des Prüfgeräts (40), die Ja/Nein-Information des Datenträgers (10) bereitgestellt zu bekommen (S11a; S11b-S14b), anhand einer Signatur (42) verifiziert wird (S8), die von dem empfangen Prüfzertifikat (41) umfasst ist.

9. Portabler Datenträger (10), umfassend einen Prozessor (14), eine Steuereinrichtung (16), eine Prüfeinrichtung (17) zum Prüfen einer altersabhängigen Zugangsberechtigung eines Benutzers, einen Speicher (12), in dem zumindest das Geburtsdatum (21) des Benutzers und ein aktualisierbares Vergleichsdatum (22) gespeichert ist, und eine Kommunikationsschnittstelle (15) zur Datenkommunikation mit externen Geräten (30, 40), wobei die Steuereinrichtung (16) eingerichtet ist, von einem mit dem Datenträger (10) über die Kommunikationsschnittstelle (15) verbundenen Prüfgerät (40) ein Mindestalter (43) zu empfangen und ein positives/negatives Prüfergebnis der Prüfeinrichtung (40) in Form einer entsprechenden Ja/Nein-Information (25; 26) für das Prüfgerät (40) bereitzustellen, und wobei die Prüfeinrichtung (40) eingerichtet ist zu prüfen, ob das aus dem Geburtsdatum (21) und dem Vergleichsdatum (22) ableitbare Alter des Benutzers das Mindestalter (43) erreicht, **dadurch gekennzeichnet, dass**
- der Empfang des Mindestalters (43) erfolgt, indem die Steuereinrichtung (16) von dem Prüfgerät (40) ein Prüfzertifikat (41) empfängt, das ein zu prüfendes Mindestalter (43) umfasst, und
die Steuereinrichtung (16) eingerichtet ist, von einem mit dem Datenträger (10) über die Kommunikationsschnittstelle (15) verbundenen öffentlich zugänglichen Aktualisierungsgerät (30) ein Aktualisierungszertifikat (31) zu empfangen, das ein aktuelles Vergleichsdatum (33) umfasst, und das im Speicher (12) gespeicherte aktualisierbare Vergleichsdatum (22) durch Ersetzen durch das empfangene Vergleichsdatum (33) zu aktualisieren, sofern das empfangene Vergleichsdatum (33) aktueller als das gespeicherte Vergleichsdatum (22) ist.

10. Datenträger (10) nach Anspruch 9, **dadurch gekennzeichnet, dass** die Steuereinrichtung (16) eingerichtet ist, über die Kommunikationsschnittstelle (15) ein Aktualisierungszertifikat (31) zu empfangen und das Aktualisierungszertifikat (31) nur dann zu akzeptieren und das Vergleichsdatum (22) zu aktualisieren, wenn das Aktualisierungszertifikat (31) nur das aktuelle Vergleichsdatum (33) und keinerlei Leseberechtigung des Aktualisierungsgeräts (30) umfasst.

11. Datenträger (10) nach Anspruch 9 oder 10, **gekennzeichnet durch** eine Verifikationseinrichtung (18), die eingerichtet ist, vor der Aktualisierung des Vergleichsdatums (22) **durch** die Steuereinrichtung (16) eine Herkunft des Aktualisierungszertifikats (31) von einer vertrauenswürdigen Stelle **durch** Verifizieren einer Signatur (32), die von dem empfangenen Aktualisierungszertifikat (31) umfasst ist, sicherzustellen und im Erfolgsfall die Aktualisierung des Vergleichsdatums (22) **durch** die Steuereinrichtung (16) **durch** ein Aktivierungssignal an die Steuereinrichtung (16) zu veranlassen.

12. Datenträger (10) nach einem der Ansprüche 9 bis 11, **dadurch gekennzeichnet, dass** die Steuereinrichtung (16) eingerichtet ist, einen Lesezugriff des Prüfgeräts (40) auf einen Speicherbereich (26) des Speichers (12) zu ermöglichen, für den das Prüfzertifikat (41) eine Leseberechtigung (44) umfasst, und dem Prüfgerät (40) das Prüfergebnis durch Hinterlegen der Ja/Nein-Information (26) in demjenigen Speicherbereich (23) des Speichers (12) bereitzustellen, für den das Prüfgerät (40) eine Leseberechtigung (44) nachgewiesen hat.

13. Datenträger (10) nach einem der Ansprüche 9 bis 12, **dadurch gekennzeichnet, dass** die Steuereinrichtung (16) eingerichtet ist, dem Prüfgerät (40) das Prüfergebnis durch Übertragen eines die Ja/Nein-Information umfassenden Ja/Nein-Signals (25) an das Prüfgerät (40) bereitzustellen.

14. Datenträger (10) nach einem der Ansprüche 9 bis 13, **dadurch gekennzeichnet, dass** die Verifikationseinrichtung (18) eingerichtet ist, vor dem Prüfen der altersabhängigen Zugangsberechtigung des Benutzers durch die Prüfeinrichtung (17) die Berechtigung des Prüfgeräts (40), die Ja/Nein-Information der Prüfeinrichtung (17) bereitgestellt zu bekommen, anhand einer Signatur (42) zu verifizieren, die das empfange Prüfzertifikat (41) umfasst.

15. Datenträger (10) nach einem der Ansprüche 9 bis 14, **dadurch gekennzeichnet, dass** der Datenträger (10) ein chipkartenförmiger Datenträger ist, insbesondere ein elektronisches Ausweisdokument oder eine elektronische Identitätskarte.

## Claims

1. A method for checking an age-dependent access authorization of a user by a portable data carrier (10) in which at least the date of birth (21) of the user and an updatable comparison date (22) is stored, having the steps of:
- receiving (S3) a check certificate (41), which comprises a minimum age (24, 43) to be checked, from a check device (40) by the data carrier (10);
- checking (S4) whether the user's age derivable from the date of birth (21) and the updatable comparison date (22) meets the minimum age (24, 43); and
- making available (S11a; S11b-S14b) a positive/negative check result in the form of a corresponding YES/NO information (25, 26) for the check device (40),
- **characterized in that**
- the updatable comparison date is updated by receiving an update certificate containing a current comparison date from a publicly accessible update device (30) and the stored comparison date (22) is replaced by the received comparison date (33), if the received comparison date (33) is more current than the stored comparison date (22).

2. The method according to claim 1, **characterized in that** the update device (30) regularly makes available update certificates (31) with current comparison dates (33) to be received (S3) by a data carrier (10) connected with the update device (30).

3. The method according to claim 1 or 2, **characterized in that** the data carrier (10) receives the update certificate (31) by downloading (S3) from a public terminal or from a website in the Internet.

4. The method according to any of claims 1 to 3, **characterized in that** the data carrier (10) accepts the update certificate (31) and updates (S5) the updatable comparison date (22) only when the update certificate (31) comprises only the current comparison date (33) and does not comprise any read authorization of the update device (30).

5. The method according to any of claims 1 to 4, **characterized in that** the data carrier (10) accepts the update certificate (31) and updates (S5) the updatable comparison date (22) only when on the basis of a signature (32), which is comprised in the received update certificate (31), there is verified (S4) that the update certificate (31) comes from a trustworthy body.

6. The method according to any of the preceding claims, **characterized in that** to the check device (40) is made available the check result by the YES/NO information (26) being deposited (S12b) in a memory area (23) of the data carrier (10) for which the check device (40) has established (S11b) a read authorization (44) by means of the check certificate (41) received from the data carrier (10).

7. The method according to any of claims 1 to 5, **characterized in that** to the check device (40) is made available the check result by the YES/NO information being transmitted (S11a) in the form of a YES/NO signal (25) from the data carrier (10) to the check device (40).

8. The method according to any of the preceding claims, **characterized in that** before the check (S9) of the user's age-dependent access authorization, the authorization of the check device (40) to have made available thereto (S11a; S11b-S14b) the YES/NO information of the data carrier (10) is verified (S8) on the basis of a signature (42) which is comprised in the received check certificate (41).

9. A portable data carrier (10) comprising a processor (14), a control unit (16), a check unit (17) for checking an age-dependent access authorization of a user, a memory (12) in which there is stored at least the date of birth (21) of the user and an updatable comparison date (22), and a communication interface (15) for data communication with external devices (30, 40), wherein the control unit (16) is adapted to receive a minimum age (43) from a check device (40) connected with the data carrier (10) via the communication interface (15) and to make available a positive/negative check result of the check unit (40) to the check device (40) in the form of a corresponding YES/NO information (25; 26), and wherein the check unit (40) is adapted to check whether the user's age derivable from the date of birth (21) and the comparison date (22) meets the minimum age (43), **characterized in that**
- receiving the minimum age (43) is effected by the control unit (16) receiving from the check device (40) a check certificate (41) which comprises a minimum age (43) to be checked, and
the control unit (16) is adapted to receive from a publicly accessible update device (30) connected with the data carrier (10) via the communication interface (15) an update certificate (31) which comprises a current comparison date (33), and to update the updatable comparison date (22) stored in the memory (12) by replacing it with the received comparison date (33), if the received comparison date (33) is more current than the stored comparison date (22).

10. The data carrier (10) according to claim 9, **characterized in that** the control unit (16) is adapted to receive an update certificate (31) via the communication interface (15) and to accept the update certificate (31) and update the comparison date (22) only when the update certificate (31) comprises only the current comparison date (33) and not any read authorization of the update device (30).

11. The data carrier (10) according to claim 9 or 10, **characterized by** a verification unit (18) which is adapted to ensure, before the comparison date (22) is updated by the control unit (16), the update certificate's (31) origin from a trustworthy body by verifying a signature (32) which is comprised in the received update certificate (31), and in the case of success to initiate the update of the comparison date (22) by the control unit (16) through an activation signal sent to the control unit (16).

12. The data carrier (10) according to any of claims 9 to 11, **characterized in that** the control unit (16) is adapted to enable a read access of the check device (40) to a memory area (26) of the memory (12) for which the check certificate (41) comprises a read authorization (44), and to make available to the check device (40) the check result by depositing the YES/NO information (26) **in that** memory area (23) of the memory (12) for which the check device (40) has established a read authorization (44).

13. The data carrier (10) according to any of claims 9 to 12, **characterized in that** the control unit (16) is adapted to make available to the check device (40) the check result by transmitting a YES/NO signal (25) comprising the YES/NO information to the check device (40).

14. The data carrier (10) according to any of claims 9 to 13, **characterized in that** the verification unit (18) is adapted to verify, before the check of the user's age-dependent access authorization by the check unit (17), the authorization of the check device (40) to have made available thereto the YES/NO information of the check unit (17) on the basis of a signature (42) which the received check certificate (41) comprises.

15. The data carrier (10) according to any of claims 9 to 14, **characterized in that** the data carrier (10) is a chip-card shaped data carrier, in particular an electronic identification document or an electronic identity card.

## Revendications

1. Procédé de vérification d'une autorisation d'accès dépendant de l'âge d'un utilisateur par un support de données portable (10) dans lequel au moins la date de naissance (21) de l'utilisateur et une date de comparaison (22) actualisable est mémorisée, comprenant les étapes :
- réception (S3) d'un certificat destiné à la vérification (41), lequel comporte une âge minimum (24, 43) à vérifier, de la part d'un appareil de vérification (40) par le support de données (10) ;
- vérification (S4) déterminant si l'âge de l'utilisateur pouvant être déduit de la date de naissance (21) et de la date de comparaison (22) actualisable atteint l'âge minimum (24, 43); et
- mise à disposition (S11a; S11b-S14b) d'un résultat positif / négatif de vérification sous forme d'une information Oui/Non correspondante pour l'appareil de vérification (40),
- **caractérisé en ce que**
- la date de comparaison actualisable est actualisée, ce qui a lieu **en ce que**, de la part d'un appareil d'actualisation (30) publiquement accessible, un certificat d'actualisation contenant une date de comparaison actuelle est reçu et la date de comparaison (22) mémorisée est remplacée par la date de comparaison (33) reçue dans la mesure où la date de comparaison (33) reçue est plus actuelle que la date de comparaison (22) mémorisée.

2. Procédé selon la revendication 1, **caractérisé en ce que** l'appareil d'actualisation (30) met régulièrement à disposition des certificats d'actualisation (31) contenant des dates de comparaison (33) destinés à être reçus (S3) par un support de données (10) relié à l'appareil d'actualisation (30).

3. Procédé selon la revendication 1 ou 2, **caractérisé en ce que** le support de données (10) reçoit le certificat d'actualisation (31) par téléchargement (S3) depuis un terminal public ou depuis une page Web sur Internet.

4. Procédé selon une des revendications de 1 à 3, **caractérisé en ce que** le support de données (10) n'accepte le certificat d'actualisation (31) et n'actualise (S5) la date de comparaison (22) actualisable que quand le certificat d'actualisation (31) ne comprend que la date de comparaison (33) actuelle et aucune autorisation de lecture de l'appareil d'actualisation (30).

5. Procédé selon une des revendications de 1 à 4, **caractérisé en ce que** le support de données (10) n'accepte le certificat d'actualisation (31) et n'actualise (S5) la date de comparaison (22) actualisable que quand, au moyen d'une signature (32) comprise dans le certificat d'actualisation (31) reçu, il est vérifié (S4) que le certificat d'actualisation (31) provient d'une autorité de confiance.

6. Procédé selon une des revendications précédentes, **caractérisé en ce que** le résultat de la vérification est mis à la disposition de l'appareil de vérification (40), ce qui a lieu **en ce que** l'information Oui/Non (26) est enregistrée (S12b) dans une zone mémoire (23) du support de données (10) pour laquelle l'appareil de vérification (40) a, au moyen du certificat de vérification (41) reçu par le support de données (10), prouvé (S11b) une autorisation de lecture (44).

7. Procédé selon une des revendications de 1 à 5, **caractérisé en ce que** le résultat de la vérification est mis à la disposition de l'appareil de vérification (40), ce qui a lieu **en ce que** l'information Oui/Non est transmise (S11a) sous forme d'un signal Oui/Non (25) du support de données (10) à l'appareil de vérification (40).

8. Procédé selon une des revendications précédentes, **caractérisé en ce que**, avant la vérification (S9) de l'autorisation d'accès dépendant de l'âge d'un utilisateur, l'autorisation de l'appareil de vérification (40) d'obtenir (S11a; S11b-S14b) la mise à sa disposition de l'information Oui/Non du support de données (10) est vérifiée (S8) au moyen d'une signature (42) comprise dans le certificat de vérification (41) reçu.

9. Support de données (10) portable comprenant un processeur (14), un dispositif de commande (16), un dispositif de vérification (17) pour la vérification d'une autorisation d'accès dépendant de l'âge d'un utilisateur, une mémoire (12) dans laquelle au moins la date de naissance (21) de l'utilisateur et une date de comparaison (22) actualisable est mémorisée, et une interface de communication (15) pour la communication de données avec des appareils externes (30, 40), le dispositif de commande (16) étant configuré pour recevoir de la part d'un appareil de vérification (40) relié au support de données (10) par l'intermédiaire de l'interface de communication (15) un âge minimum (43) et pour mettre à disposition pour l'appareil de vérification (40) un résultat positif / négatif de vérification du dispositif de vérification (40) sous forme d'une information Oui/Non (25; 26) correspondante, et le dispositif de vérification (40) étant configuré pour vérifier si l'âge de l'utilisateur pouvant être déduit de la date de naissance (21) et de la date de comparaison (22) atteint l'âge minimum (43), **caractérisé en ce que**
la réception de l'âge minimum (43) a lieu, ce qui a lieu **en ce que** dispositif de commande (16) reçoit de la part de l'appareil de vérification (40) un certificat de vérification (41) qui comporte un âge minimum (43) à vérifier, et
le dispositif de commande (16) est configuré pour recevoir de la part d'un appareil d'actualisation (30) publiquement accessible relié au support de données (10) par l'intermédiaire de l'interface de communication (15) un certificat d'actualisation (31) comprenant une date de comparaison (33) actuelle et pour actualiser la date de comparaison (22) actualisable mémorisée dans la mémoire (12) par remplacement par la date de comparaison (33) reçue, dans la mesure où la date de comparaison (33) reçue est plus actuelle que la date de comparaison (22) mémorisée.

10. Support de données (10) selon la revendication 9, **caractérisé en ce que** le dispositif de commande (16) est configuré pour recevoir par l'intermédiaire de l'interface de communication (15) un certificat d'actualisation (31) et pour n'accepter le certificat d'actualisation (31) et n'actualiser la date de comparaison (22) que quand le certificat d'actualisation (31) ne comprend que la date de comparaison (33) actuelle et aucune autorisation de lecture de l'appareil d'actualisation (30).

11. Support de données (10) selon la revendication 9 ou 10, **caractérisé par** un dispositif de vérification (18) qui est configuré pour, avant l'actualisation de la date de comparaison (22) par le dispositif de commande (16), garantir une provenance du certificat d'actualisation (31) d'une autorité de confiance par vérification d'une signature (32) comprise dans le certificat d'actualisation (31) reçu, et pour, si cela a abouti, pour déclencher l'actualisation de la date de comparaison (22) par le dispositif de commande (16) par un signal d'activation envoyé au dispositif de commande (16).

12. Support de données (10) selon une des revendications de 9 à 11, **caractérisé en ce que** le dispositif de commande (16) est configuré pour permettre un accès en lecture de l'appareil de vérification (40) sur une zone mémoire (26) de la mémoire (12) pour laquelle le certificat de vérification (41) comprend une autorisation de lecture (44), et pour mettre à la disposition de l'appareil de vérification (40) le résultat de la vérification par enregistrement de l'information Oui/Non (26) dans la zone mémoire (23) de la mémoire (12) pour laquelle l'appareil de vérification (40) a prouvé une autorisation de lecture (44).

13. Support de données (10) selon une des revendications de 9 à 12, **caractérisé en ce que** le dispositif de commande (16) est configuré pour mettre à la disposition de l'appareil de vérification (40) le résultat de la vérification par transmission d'un signal Oui/Non (25) comprenant l'information Oui/Non à l'appareil de vérification (40).

14. Support de données (10) selon une des revendications de 9 à 13, **caractérisé en ce que** le dispositif de vérification (18) est configuré pour, avant la vérification de l'autorisation d'accès dépendant de l'âge d'un utilisateur par le dispositif de vérification (17), vérifier à l'aide d'une signature (42) comprenant le certificat de vérification (41) reçu l'autorisation de l'appareil de vérification (40) à obtenir la mise à sa disposition de l'information Oui/Non du dispositif de vérification (17).

15. Support de données (10) selon une des revendications de 9 à 14, **caractérisé en ce que** le support de données (10) est un support de données en forme de carte à puce, en particulier un document d'identification électronique ou une carte d'identité électronique.
